(19) Europäisches Patentamt
European Patent Office
Office européen des brevets

(11) Veröffentlichungsnummer: **0 025 839**
**B1**

(12) # EUROPÄISCHE PATENTSCHRIFT

(45) Veröffentlichungstag der Patentschrift: **23.03.83**

(51) Int. Cl.³: **C 07 F 9/00,** C 08 F 4/68

(21) Anmeldenummer: **80104457.9**

(22) Anmeldetag: **29.07.80**

(54) **In organischen Medien lösliche Vanadium (IV)-Verbindungen, Verfahren zu ihrer Herstellung und ihre Verwendung.**

(30) Priorität: **24.08.79 DE 2934277**

(43) Veröffentlichungstag der Anmeldung: **01.04.81 Patentblatt 81/13**

(45) Bekanntmachung des Hinweises auf die Patenterteilung: **23.03.83 Patentblatt 83/12**

(84) Benannte Vertragsstaaten: **AT BE CH DE FR GB IT LI LU NL SE**

(56) Entgegenhaltungen:
**EP-A-0 005 550**
**DD-A-73 323**
**DE-A-2 706 118**
**US-A-3 086 983**

(73) Patentinhaber: **DYNAMIT NOBEL AKTIENGESELLSCHAFT, Patentabteilung Postfach 1209, D-5210 Troisdorf, Bez. Köln (DE)**

(72) Erfinder: **Josten, Walter, Dr., Sudetenstrasse 2, D-7888 Rheinfelden (DE)**
Erfinder: **Vahlensieck, Hans-Joachim, Dr., Im Habiken 2, D-7867 Wehr (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 025 839 B1

BUNDESDRUCKEREI BERLIN

# In organischen Medien lösliche Vanadium (IV)-Verbindungen, Verfahren zu ihrer Herstellung und ihre Verwendung

Gegenstand der vorliegenden Erfindung sind neue Vanadium(IV)-Alkoholate, die in organischen Lösungsmitteln löslich sind und eine größere Stabilität besitzen als bekannte Vanadium-Alkoholate.

Es sind bereits Alkoholate des vierwertigen Vanadiums bekannt, die z. B. als Polymerisationskatalysatoren eingesetzt werden. Sie entsprechen der Formel $V(OR)_4$ und sind in einigen organischen Lösungsmitteln löslich. Jedoch ist ihre Herstellung aufwendig und schwierig, weil man sie wegen der leichten Hydrolysierbarkeit des $VCl_4$ nicht durch direkte Umsetzung dieser Verbindung mit Alkoholen herstellen kann; man muß vielmehr $VCl_4$ mit Lithiumdialkylamid umsetzen und das dabei erhaltene Tetrakis-(dialkylamino)vanadium(IV) einer Alkoholyse unterwerfen (vgl. Can. J. Chem. 39 (1961), S. 1386 ff.).

Diese bekannten Alkoholate des vierwertigen Vanadiums haben noch den weiteren Nachteil, daß sie thermisch nicht stabil sind; bei Temperaturen ab 100° C beginnen sie, sich zu zersetzen. Auch ihre Lagerbeständigkeit läßt zu wünschen übrig; sie lassen sich nur unter Einhaltung bestimmter Vorsichtsmaßregeln zufriedenstellend lagern. Auch die Alkoholate des fünfwertigen Vanadiums, wie z. B. $VO(OCH_3)_3$ oder $VO(OC_2H_5)_3$, die ebenfalls als Katalysatoren eingesetzt werden, besitzen die gleiche Unbeständigkeit, so daß sie die Vanadium(IV)-Verbindungen nicht vollwertig ersetzen können.

Es bestand deshalb die Aufgabe, Verbindungen des vierwertigen Vanadiums zu finden, die auf einfache Weise herstellbar sind, sich bei Temperaturen bis zu 150° C nicht zersetzen, lagerbeständig sind und in unpolaren organischen Lösungsmitteln löslich sind.

In Erfüllung dieser Aufgabe wurden nun Di(trialkylat)-oxo-vanadate(IV) gefunden, die der Formel

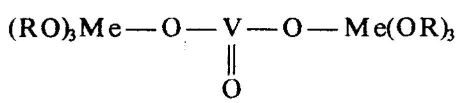

entsprechen, in der Me für ein Metall der vierten Nebengruppe des Periodischen Systems der Elemente und R für einen Alkyl- oder Cycloalkylrest mit 1 bis 20 C-Atomen oder für einen Arylrest steht.

Die neuen Verbindungen sind in unpolaren organischen Lösungsmitteln löslich und zersetzen sich selbst bei Temperaturen von 190° C noch nicht. Ihre Herstellung erfolgt in einfacher, an sich bekannter Weise durch Umsetzung von Vanadylcarboxilaten mit Alkoholaten von Titan oder Zirkonium oder Hafnium.

Bei den als Ausgangsprodukte für die Herstellung der neuen Alkoholate einsetzbaren Metallalkoholaten kann der Alkoholrest sowohl ein aliphatischer, cycloaliphatischer als auch ein aromatischer Rest sein. Der aliphatische Rest kann geradkettig oder verzweigt sein und bis zu 20 C-Atomen umfassen; als aromatische Reste kommen hauptsächlich der Phenyl- und die Cresylreste in Frage. Beispiele entsprechender Verbindungen sind Methyltitanat, Äthyltitanat, n-Propyltitanat, Isobutyltitanat, Nonyltitanat, 2-Äthylhexyltitanat, Cetyltitanat, Kresyltitanat, Methylzirkonat, Butylzirkonat, Oleylzirkonat(IV), Phenylzirkonat(IV).

Die bevorzugten Alkylreste der Metallsäureester sind diejenigen mit 1 bis 10 C-Atomen.

Diese Metallsäureester werden mit Vanadylcarboxilaten der Formel $VO(OOCR')_2$ umgesetzt, wobei R' ein Alkylrest mit 1 bis 4 C-Atomen, vorzugsweise der Methylrest, ist. Das Molverhältnis von Vanadylcarboxilat zu Metallsäureester liegt dabei vorzugsweise bei 1 : 1,8 bis 2,2. Bei der Umsetzung entsteht als Zwischenprodukt ein Halbester der Vanadylverbindung

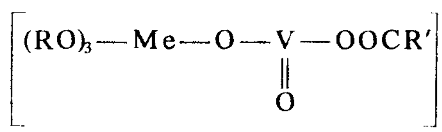

der jedoch nicht isoliert zu werden braucht, sowie der entsprechende Carbonsäureester.

Die Reaktion kann in Abwesenheit von Lösungsmitteln durchgeführt werden, es empfiehlt sich jedoch, die Reaktion in einem hochsiedenden Lösungsmittel, wie Toluol, Xylol, Cumol, Tetrahydronaphthalin (Tetralin), Decahydronaphthalin (Decalin) oder aliphatischen, hochsiedenden Kohlenwasserstoffen durchzuführen. Der Halbester bildet sich bei Temperaturen zwischen 100 und 150° C; anschließend wird noch weiter bis zu vollständigen Umsetzung erhitzt, wobei die Temperaturen bis zu 200° C erhöht werden können.

Der bei der Reaktion entstehende Carbonsäureester wird vorzugsweise bereits während der Reaktion kontinuierlich abdestilliert, sofern sein Siedepunkt unterhalb des Siedepunkts des verwendeten Lösungsmittels liegt. An der Menge des abdestillierten Carbonsäureesters läßt sich auch der Fortgang der Reaktion verfolgen.

Nach beendeter Reaktion wird gegebenenfalls der Rest des Carbonsäureesters abdestilliert, der erhaltene neue Metallsäureester vom Lösungsmittel befreit und gegebenenfalls im Vakuum abdestilliert.

Die neuen Metallsäureester sind in unpolaren, organischen Lösungsmitteln löslich und können demzufolge in Lösung als Katalysatoren eingesetzt werden. Außer den oben genannten Lösungsmitteln sind sie auch in niedriger siedenden aromatischen und unpolaren aliphatischen Lösungsmitteln löslich, wie z. B. in Benzol, Hexan oder Benzinfraktionen. Diese Lösungen sind bei Raumtemperatur bei Ausschluß von Feuchtigkeit über mehrere Monate hinweg stabil.

Die neuen Verbindungen eignen sich als Katalysatoren bei der Polymerisation von Olefinen, Dienen und deren Copolymerisation. Weiterhin lassen sie sich auch als Katalysatoren bei der Polymerisation von Vinylchlorid, Acrylsäureestern oder Epoxiden, sowie bei Veresterungs- oder Umesterungsreaktionen einsetzen.

Beispiel 1

Herstellung von Di(tri-butyltitanat)-oxo-vanadat(IV) der Formel
$O=V-[O-Ti(O-C_4H_9)_3]_2$

Es wurden 6,46 kg Vanadium-oxo-acetat (96,7%ig) in 30 Liter eines Gemisches aus aliphatischen Kohlenwasserstoffen im Siedebereich zwischen 184 und 211°C aufgeschlämmt. Unter Rühren wurden daraufhin langsam 23 kg Titantetrabutylat hinzugefügt und anschließend das Gemisch aufgeheizt. Sobald im Reaktionsgemisch eine Temperatur von 155°C erreicht war, wurde über einen kurzen Destillationsaufsatz der bei der Reaktion entstandene Essigsäurebutylester abdestilliert. Während des Abdestillierens dieses Esters stieg die Innentemperatur bis auf 190°C an.

Anschließend wurde das Lösungsmittel in einem Rotationsverdampfer bei 1 bis 10 mbar abdestilliert. Es wird eine braunschwarze, viskose Flüssigkeit erhalten. Die Analyse ergibt einen Gehalt von 16,3% Titan und 8,6% Vanadium.

Die neue Verbindung ist in n-Hexan in allen Verhältnissen mischbar. Diese Lösungen sind bei Raumtemperatur, bei Ausschluß von Feuchtigkeit, über drei Monate stabil.

Beispiel 2

Herstellung von Di(tricetyltitanat)-oxo-vanadat(IV)

Es wurden 3,8 kg Vanadylacetat in hochsiedendem, aliphatischem Kohlenwasserstoff gelöst. Zu dieser Lösung wurden 46,6 kg Cetyltitanat zugegeben. Die Weiterverarbeitung dieses Gemisches erfolgte analog Beispiel 1. Nach Abdestillieren von Lösungsmittel, Ester und etwas überschüssigem Cetylalkohol erhält man ein schokoladenbraunes, festes Produkt mit 4% Vanadin. Es ist z. B. in Dekalin oder anderen aliphatischen Kohlenwasserstoffen löslich.

Beispiel 3

Es wurden 3,8 kg Vanadylacetat in einem hochsiedenden Kohlenwasserstoffgemisch gelöst. Nach Zugabe von 54,5 kg Stearyltitanat wurde zwei Stunden am Rückfluß erhitzt; daraufhin wurde das Lösungsmittel sowie der überschüssige Stearylalkohol soweit wie möglich, zuletzt im Vakuum einer Ölpumpe, abdestilliert: Zurück blieb ein festes, schokoladenbraunes Produkt, das bei einem Titangehalt von 4% und einem Vanadingehalt von 1,9% überwiegend aus dem gewünschten Di(tristearyltitanat)-oxo-vanadat(IV) bestand. Es ist ebenfalls in aliphatischen Kohlenwasserstoffen (z. B. n-Hexan) gut löslich.

**Patentansprüche für die Vertragsstaaten: BE, CH, DE, FR, GB, IT, LI, LU, NL, SE**

1. Verbindungen des vierwertigen Vanadiums der allgemeinen Formel

$$(RO)_3-M-O-\overset{\overset{\displaystyle O}{\|}}{V}-O-M-(OR)_3$$

wobei M ein Metall der vierten Nebengruppe des Periodischen Systems der Elemente und R ein Alkyl- oder Cycloalkylrest mit 1 bis 20 C-Atomen oder ein Arylrest bedeutet.

2. Verfahren zur Herstellung der in Anspruch 1 genannten Verbindungen, dadurch gekennzeichnet, daß man ein Vanadyl-Carboxilat der Formel $VO(OOCR')_2$, in der R' für einen $C_1$- bis $C_4$-Alkylrest steht, mit einem Metallalkoholat der allgemeinen Formel $M(OR)_4$, in der M und R die oben genannte Bedeutung haben, bei Temperaturen zwischen 100 und 200°C umsetzt.

3. Verwendung der in Anspruch 1 genannten Verbindungen als Katalysator für die Polymerisation, Kopolymerisation oder Terpolymerisation von Olefinen, Dienen, Styrol, Vinylchlorid, Acrylsäureestern und Epoxiden.

**Patentansprüche für den Vertragsstaat: AT**

1. Verfahren zur Herstellung von Verbindungen des vierwertigen Vanadiums der allgemeinen Formel

$$(RO)_3-M-O-\overset{\overset{\displaystyle O}{\|}}{V}-O-M-(OR)_3$$

wobei M ein Metall der vierten Nebengruppe des Periodischen Systems der Elemente und R ein Alkyl- oder Cycloalkylrest mit 1 bis 20 C-Atomen oder ein Arylrest bedeutet, dadurch gekennzeichnet, daß man ein Vanadyl-Carboxylat der Formel $VO(OOCR')_2$, in der R' für einen $C_1$- bis $C_4$-Alkylrest steht, mit einem Metallalkoholat der allgemeinen Formel $M(OR)_4$, in der M und R die oben genannte Bedeutung haben, bei Temperaturen zwischen 100 und 200°C umsetzt.

2. Verwendung der in Anspruch 1 genannten Verbindungen als Katalysator für die Polymerisation, Copolymerisation oder Terpolymerisation von Olefinen, Dienen, Styrol, Vinylchlorid, Acrylsäureestern und Epoxiden.

**Claims for the Contracting states: BE, CH, DE, FR, GB, IT, LI, LU, NL, SE**

1. Compounds of tetravalent vanadium of the general formula

$$(RO)_3-M-O-\overset{O}{\overset{\|}{V}}-O-M-(OR)_3$$

wherein M denotes a metal of the fourth sub-group of the Periodic System of the elements and R denotes an alkyl or cycloalkyl residue with 1 to 20 C-atoms or an aryl residue.

2. Process for the preparation of the compounds indicated in claim 1, characterised in that a vanadyl carboxylate of the formula $VO(OOCR')_2$ in which R' stands for a $C_1$ to $C_4$ alkyl residue is reacted with a metal alcoholate of the general formula $M(OR)_4$, in which M and R have the above-indicated meaning, at temperatures between 100 and 200° C.

3. Use of the compounds indicated in claim 1 as catalyst for the polymerisation, copolymerisation or terpolymerisation of olefins, dienes, styrene, vinylchloride, acrylic acid esters and epoxides.

**Claims for the Contracting state: AT**

1. Process for the preparation of Compounds of tetravalent vanadium of the general formula

$$(RO)_3-M-O-\overset{O}{\overset{\|}{V}}-O-M-(OR)_3$$

wherein M denotes a metal of the fourth sub-group of the Periodic System of the elements and R denotes an alkyl or cycloalkyl residue with 1 to 20 C-atoms or an aryl residue, characterised in that a vanadyl carboxylate of the formula $VO(OOCR')_2$ in which R' stands for a $C_1$ to $C_4$ alkyl residue is reacted with a metal alcoholate of the general formula $M(OR)_4$, in which M and R habe the above-indicated meaning, at temperatures between 100 and 200° C.

2. Use of the compounds indicated in claim 1 as catalyst for the polymerisation, copolymerisation or terpolymerisation of olefins, dienes, styrene, vinylchloride, acrylic acid esters and epoxides.

**Revendications pour les Etats Contractants: BE, CH, DE, FR, GB, IT, LI, LU, NL, SE**

1. Composés du vanadium tétravalent de formule générale:

$$(RO)_3-M-O-\overset{O}{\overset{\|}{V}}-O-M-(OR)_3$$

dans laquelle M représente un métal du quatrième sous-groupe du système périodique des éléments et R un radical alcoyle ou cycloalcoyle ayant 1 à 20 atomes de carbone ou un radical aryle.

2. Procédé de préparation des composés cités à la revendication 1, caractérisé en ce qu'on fait réagir un carboxylate de vanadyle de formule $VO(OOCR')_2$, dans laquelle R' représente un radical alcoyle en $C_1-C_4$, avec un alcoolate métallique de formule générale $M(OR)_4$, dans laquelle M et R ont la signification citée plus haut, à des températures entre 100 et 200° C.

3. Utilisation des composés cités à la revendication 1 comme catalyseur pour la polymérisation, la copolymérisation ou la terpolymérisation des oléfines, des diènes, du styrène, du chlorure de vinyle, des esters d'acide acrylique et des époxydes.

**Revendications pour l'Etat contractant: AT**

1. Procédé de préparation des composés du vanadium tétravalent de formule générale:

$$(RO)_3-M-O-\overset{O}{\overset{\|}{V}}-O-M-(OR)_3$$

dans laquelle M représente un métal du quatrième sous-groupe du système périodique des éléments et R un radical alcoyle ou cycloalcoyle ayant 1 à 20 atomes de carbone ou un radical aryle, caractérisé en ce qu'on fait réagir un carboxylate de vanadyle de formule $VO(OOCR')_2$, dans laquelle R' représente un radical alcoyle en $C_1-C_4$, avec un alcoolate métallique de formule générale $M(OR)_4$, dans laquelle M et R ont la signification citée plus haut, à des températures entre 100 et 200° C.

2. Utilisation des composés cités à la revendication 1 comme catalyseur pour la polymérisation, la copolymérisation ou la terpolymérisation des oléfines, des diènes, du styrène, du chlorure de vinyle, des esters d'acide acrylique et des époxydes.